# EUROPEAN PATENT SPECIFICATION

(11) **EP 3 609 900 B1**
(45) Date of publication and mention of the grant of the patent: **17.02.2021**
(21) Application number: 18716821.6
(22) Date of filing: 23.03.2018
(51) Int. Cl.: C07F 9/6568, C07F 15/00, C07F 7/18

(54) **METHOD FOR PREPARING ARYLALKOXYSILANES BY DEHYDROGENATIVE SILYLATION**
VERFAHREN ZUR HERSTELLUNG VON ARYLALKOXYSILANEN DURCH DEHYDRIERENDE SILYLIERUNG
PROCÉDÉ DE PRÉPARATION D'ARYLALCOXYSILANES PAR SILYLATION DÉSHYDROGÉNANTE

(30) Priority: 11.04.2017 US 201762484030 P
(43) Date of publication of application: 19.02.2020
(73) Proprietor: Dow Silicones Corporation, Midland, MI 48686-0994 (US)
(72) Inventor: CHOI, Jongwook, Midland, MI 48640 (US); KATSOULIS, Dimitris, Midland, MI 48642 (US); LEE, Kangsang, Midland, MI 48642 (US)
(74) Representative: Murgitroyd & Company
(86) International application number: PCT/US2018/023915
(87) International publication number: WO 2018/190999

(56) References cited:
- WO-A1-2015/171881
- MURATA ET AL: "Synthesis of aryltriethoxysilanes via rhodium(I)-catalyzed cross-coupling of aryl electrophiles with triethoxysilane", TETRAHEDRON, ELSEVIER SCIENCE PUBLISHERS, AMSTERDAM, NL, vol. 63, no. 19, 5 April 2007 (2007-04-05) , pages 4087-4094, XP022021531, ISSN: 0040-4020, DOI: 10.1016/J.TET.2007.02.103
- ASGARI PARHAM ET AL: "Aryne cycloaddition reactions of benzodioxasilines as aryne precursors generated by catalytic reductiveortho-CH silylation of phenols with traceless acetal directing groups", TETRAHEDRON, ELSEVIER SCIENCE PUBLISHERS, AMSTERDAM, NL, vol. 73, no. 29, 8 December 2016 (2016-12-08), pages 4052-4061, XP085092876, ISSN: 0040-4020, DOI: 10.1016/J.TET.2016.12.002
- YUANDA HUA ET AL: "Modular Approach to Reductive C sp2 -H and C sp3 -H Silylation of Carboxylic Acid Derivatives through Single-Pot, Sequential Transition Metal Catalysis", JOURNAL OF ORGANIC CHEMISTRY, vol. 80, no. 9, 17 May 2015 (2015-05-17), pages 4661-4671, XP055487647, ISSN: 0022-3263, DOI: 10.1021/acs.joc.5b00564
- DATABASE CA [Online] CHEMICAL ABSTRACTS SERVICE, COLUMBUS, OHIO, US; 2013, ZHAO, SIYUAN ET AL: "Oxygen-containing azacyclo-silane-like compounds, preparation method, application and olefin polymerization method", XP002782506, retrieved from STN Database accession no. 2013:23318
- DATABASE CA [Online] CHEMICAL ABSTRACTS SERVICE, COLUMBUS, OHIO, US; 1997, ITO, HAJIME ET AL: "Studies on organosilicon chemistry. 135. New access to cross-coupling reaction between arylsilanes or heteroarylsilanes and aryl halides mediated by a copper(I) salt", XP002782507, retrieved from STN Database accession no. 1997:461814
- DATABASE CA [Online] CHEMICAL ABSTRACTS SERVICE, COLUMBUS, OHIO, US; 1994, MOCHIDA, KUNIO ET AL: "Photochemical reactions of 2-(pentamethyldisilanyl)furan and 2-(pentamethyldigermanyl)furan. Formation of a radical pair", XP002782508, retrieved from STN Database accession no. 1994:457600
- DATABASE CA [Online] CHEMICAL ABSTRACTS SERVICE, COLUMBUS, OHIO, US; 1984, LUKEVICS, E. ET AL: "Organometallic furan derivatives. XLI. Synthesis and mass-spectrometric study of 2-carbofunctional 5-furylsilanes", XP002782509, retrieved from STN Database accession no. 1984:571334

## Description

### Cross Reference to Related Applications

This application claims the benefit under 35 U.S.C. §119 (e) of U.S. Provisional Application Serial No. 62/484030 filed on 11 April 2017.

### Technical Field

A method to prepare arylalkoxysilanes involves dehydrogenative silylation between an alkoxysilane having a silicon bonded hydrogen atom and an aromatic compound having a carbon-hydrogen bond. A rhodium bisphospholane catalyst is used in the method.

### Background

Silanes having aryl groups are useful in the manufacture of polyorganosiloxane polymers for various applications, such as high temperature resins, coatings, paint additives, pump fluids, transparent encapsulants, and/or cosmetic ingredients. Current industrial methods for production of aryl functional silanes may involve a Grignard process, which generates unwanted inorganic salt by-products (such as MgCl₂) and may be inefficient. Alternatively, a pseudo Friedel-Craft method may be used to prepare aryl functional silanes, however, this method may require high temperature and pressure and suffer from the further drawback of low yield. Alternatively, a direct synthesis reaction of an aryl halide with silicon metal in the presence of a copper catalyst may be used to prepare aryl functional silanes, however, this method may suffer from the drawback of generating undesirable perchlorinated biphenyl compounds. Therefore, there is an industry need for efficient methods with relatively low cost and energy to produce arylsilanes while improving yield and/or minimizing production of by-products.

Methods of forming a silicon-carbon bond using hydrosilanes are known in the prior art from MURATA ET AL in TETRAHEDRON 2007, 63(19), 4087-4094; ASGARI PARHAM ET AL in TETRAHEDRON 2016, 73(29), 4052-4061; YUANDA HUA ET AL in JOURNAL OF ORGANIC CHEMISTRY 2015, 80(9), 4661-4671; WO2015/171881; C. Cheng ET AL in SCIENCE 2014, 343(6173), 853-857.

### SUMMARY

A method for forming an arylalkoxysilane is disclosed herein. The method comprises:
1) combining, under conditions appropriate to form the arylalkoxysilane, starting materials comprising
   A) an alkoxysilane of formula 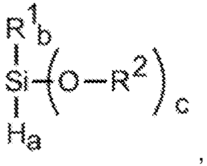 where each R¹ is independently an alkyl group of 1 to 18 carbon atoms, each R² is independently an alkyl group of 1 to 4 carbon atoms, subscript a has an average value of at least 1, subscript b has an average value of 1 to 2, and subscript c has an average value of at least 1, and a quantity (a + b + c) = 4;
   B) an aromatic compound having a carbon-hydrogen bond; and
   C) a rhodium bisphospholane catalyst.

### DETAILED DESCRIPTION

In the method described above, one or more additional starting materials may be added before and/or during step 1). Optionally, D) a hydrogen acceptor and/or E) a solvent, may be added during step 1). The method described above may further comprise 2) recovering the arylalkoxysilane. Steps 1) and 2) of the method may be performed by any convenient means. For example, step 1) may be performed by heating the starting materials at a temperature from 50°C to 150°C, alternatively 80°C to 100°C. Step 2) may be performed by stripping and/or distillation.

Starting material A) used in the method described above is an alkoxysilane, which has at least one silicon bonded hydrogen atom per molecule. The alkoxysilane has formula 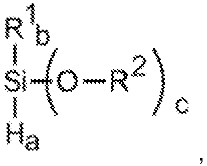 where each R¹ is independently an alkyl group of 1 to 18 carbon atoms, each R² is independently an alkyl group of 1 to 4 carbon atoms, subscript a has an average value of at least 1, subscript b has an average value of 1 to 2, and subscript c has an average value of at least 1, and a quantity (a + b + c) = 4. Alkyl groups are as defined below. Alkyl groups for R¹ and R² are exemplified by methyl and ethyl. Alternatively, each R¹ is methyl. Alternatively, each R² is ethyl. Alternatively, subscript a = 1, subscript b = 1 or 2, and subscript c = 1 or 2. Alternatively, subscript a = 1, subscript b = 2, and subscript c = 1. Alternatively, subscript a = 1, subscript b = 1, and subscript c = 2. Alternatively, the alkoxysilane may have formula selected from:
A1) 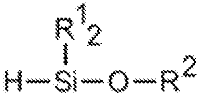 or formula A2) 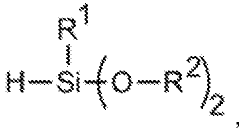 where each R¹ is methyl or ethyl and each R² is methyl or ethyl. Examples of suitable alkoxysilanes for starting material A) include dimethylethoxysilane (HMe₂SiOEt); methyldiethoxysilane (HMeSi(OEt)₂); or dimethylmethoxysilane (HMe₂SiOMe); diethylmethoxysilane (HEt₂SiOMe); or ethyldimethoxysilane (HEtSi(OMe)₂).

Aromatic compounds suitable for use in the method described herein have at least one carbon-hydrogen (C-H) bond, where said carbon atom is in a ring of the aromatic compound. Suitable aromatic compounds may have an aryl group or a heteroaryl group. Suitable aromatic compounds for starting material B) include aromatic compounds comprising a 6 membered ring (*e.g.,* 6 membered aryl ring) and aromatic compounds comprising a 5 membered ring (*e.g.,* 5 membered heteroaryl ring). Suitable aromatic compounds comprising a 6 membered ring may have formula B1): 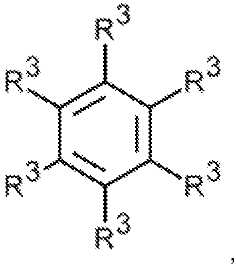 where each R³ is independently a hydrogen atom, a halogen atom, an alkyl group (as defined and exemplified below), a halogenated alkyl group (as defined and exemplified below), and a hydrocarbyloxy group; with the provisos that at least one R³ is hydrogen, and any two of R³, together with any atoms to which they are bonded, are optionally joined together to form a fused ring structure. Suitable halogen atoms for R³ include fluorine (F), chlorine (CI), or bromine (Br). Suitable alkyl groups for R³ may have 1 to 4 carbon atoms (e.g., methyl or ethyl). Suitable halogenated alkyl groups for R³ may have 1 to 4 carbon atoms (e.g., CF₃). Suitable hydrocarbyloxy groups R³ may be alkoxy groups of 1 to 4 carbon atoms (e.g., OCH₃) or aryloxy groups of 5 to 12 carbon atoms (e.g., phenoxy). Alternatively, two of R³, together with any atoms to which they are bonded may be joined together to form a fused ring structure. Exemplary aromatic compounds of formula B1) include benzodioxole, 3-methylanisole, m-xylene, benzene, bromobenzene, chlorobenzene, fluorobenzene, and 1,3-bis(trifluoromethyl)benzene.

Suitable aromatic compounds comprising a 5 membered ring may have formula B2): 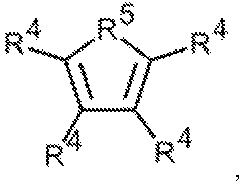 where each R⁴ is independently a hydrogen atom, a halogen atom, an alkyl group (as defined and exemplified below), a halogenated alkyl group (as defined and exemplified below), and a hydrocarbyloxy group; and R⁵ is selected from sulfur, oxygen and a nitrogen containing group of formula NR⁶, where each R⁶ is a hydrogen atom or an alkyl group of 1 to 4 carbon atoms, with the provisos that at least one R⁴ is hydrogen, and any two of R⁴, together with any atoms to which they are bonded, are optionally joined together to form a fused ring structure. Suitable halogen atoms for R⁴ include fluorine (F), chlorine (CI), or bromine (Br). Suitable alkyl groups for R⁴ may have 1 to 4 carbon atoms (e.g., methyl or ethyl). Suitable halogenated alkyl groups for R⁴ may have 1 to 4 carbon atoms (e.g., CF₃). Suitable hydrocarbyloxy groups R⁴ may be alkoxy groups of 1 to 4 carbon atoms (e.g., OCH₃) or aryloxy groups of 5 to 12 carbon atoms (e.g., phenoxy). Suitable alkyl groups for R⁶ include methyl. Alternatively, each R⁵ may be the nitrogen containing group of formula NR⁶, where each R⁶ is a hydrogen atom or an alkyl group of 1 to 4 carbon atoms. Alternatively, each R⁵ may be an oxygen atom, with the proviso that at least one R4 is not a hydrogen atom. Alternatively, R⁵ may be an oxygen atom and two of R⁴, together with any atoms to which they are bonded, are joined together to form a fused ring structure. Exemplary aromatic compounds of formula B2) include methylfuran, benzofuran, methoxybenzofuran, furan, thiofuran, and methylpyrrole, and methylindole.

Starting materials A) and B) are combined in step 1) in relative amounts of 0.1:1 to 100:1 molar equivalents of starting material B) to starting material A) (B:A ratio). Alternatively, B:A ratio may be 1.2:1 to 10:1.

Starting material C) used in the method described herein is a rhodium bisphospholane compound. Rhodium bisphospholane compounds suitable for use as starting material C) are known in the art and are commercially available. For example, the rhodium bisphospholane compounds shown below in Table 1 are available from Aldrich.

**Table 1**

| Chemical Name | Structure |
|---|---|
| 1,2-Bis[(2*R*,5*R*)-2,5-diethylphospholano]benzene(1,5-cyclooctadiene) rhodium (I) tetrafluoroborate | 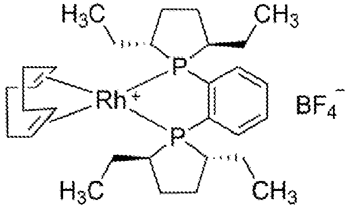 |
| 1,2-Bis[(2*S*,5*S*)-2,5-diethylphospholano]benzene(1,5-cyclooctadiene) rhodium (I) tetrafluoroborate | 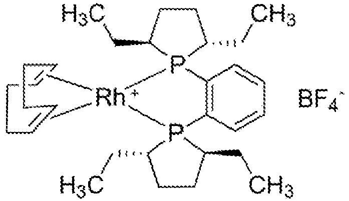 |
| 1,2-Bis[(2*R*,5*R*)-2,5-diethylphospholano]benzene(1,5-cyclooctadiene) rhodium (I) trifluoromethanesulfonate | 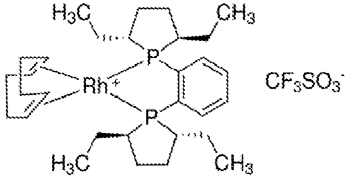 |
| 1,2-Bis[(2S,5S)-2,5-diethylphospholano]benzene(1,5-cyclooctadiene) rhodium (I) trifluoromethanesulfonate | 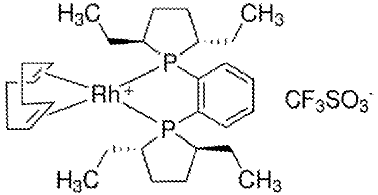 |
| (+)-1,2-Bis((2R,5R)-2,5-di-i-propylphospholano)benzene) 1,5-cyclooctadiene) rhodium(I) tetrafluoroborate | 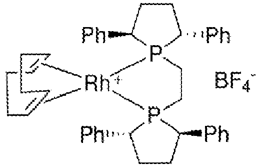 |

Alternatively, method may further comprise forming the rhodium bisphospholane catalyst for starting material C) by a method comprising combining a rhodium metal precursor that does not have bisphospholane functionality and a bisphospholane compound. An organic solvent, such as tetrahydrofuran, may be added to facilitate formation of the catalyst in this method. Combining starting materials comprising the rhodium metal precursor, the bisphospholane compound and optionally the solvent may be done by any convenient means, such as mixing at room temperature or with heating to a temperature less than or equal to boiling point of the mixture prepared by mixing the starting materials. Exemplary rhodium metal precursors may have a formula selected from [Rh(R¹²)ₙR¹⁰]₂ or [Rh(R¹²)ₙ]+R¹¹-; where each R¹² is independently an alkene or a diene, each R¹⁰ is a negatively charged ligand, each R¹¹ is an anion and subscript n is 1 or 2. Examples of alkenes for R¹² include ethylene, cyclooctene (e.g., cis-cyclooctene) or 1-octene. Examples of dienes for R¹² include 1,5-cyclooctadiene or 2,5-norbornadiene or 1,5-hexadiene. Alternatively, R¹² may be selected from 1,5-cyclooctadiene and 2,5-norbornadiene. Examples of negatively charged ligands for R¹⁰ include a halogen atom such as Cl or Br; a hydroxyl group; an alkoxy group of 1 to 4 carbon atoms, such as methoxy; or a hydrogen atom. Alternatively, R¹⁰ may be selected from CI, OH, OCH₃, and H. Examples of suitable anions for R¹¹ include perchlorate, trifluoromethylsulfonate, tetrafluoroborate (BF₄), tetrakisphenylborate, tetrakis(pentafluorophenyl)borate, methyltris(pentafluorophenyl)borate, tetrakis(3,5-bis(trifluoromethyl)phenyl)borate, hexafluoroantimonate, hexafluorophosphate (PF₆), [Al(C(CF₃)₃)₄]⁻, carboranes such as [HCB₁₁Me₅Br₆]-, (where Me represents methyl). Alternatively, the anion for R¹¹ may be BF₄ or PF₆. Exemplary rhodium metal precursors are commercially available from Sigma-Aldrich Inc. or Strem Chemicals Inc., and include, for example, di-µ-chlorotetraethylene dirhodium(I); hydroxy(cyclooctadiene)rhodium(I) dimer; and rhodium bis(norbornadiene)tetrafluoroborate.

The bisphospholane compound may have formula 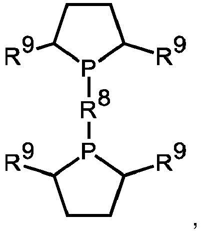 where R⁸ is a divalent hydrocarbon group and each R⁹ is independently a monovalent hydrocarbon group of 1 to 12 carbon atoms. The divalent hydrocarbon group for R⁸ is as defined below and may be an alkylene or arylene. Suitable alkylenes include ethylene. Suitable arylenes include ortho-phenylene. Suitable monovalent hydrocarbon groups for R⁹ include alkyl and aryl groups. Suitable alkyl groups are as defined below and include methyl, ethyl or propyl (e.g., iso-propyl). Suitable aryl groups are as defined below and include phenyl. Phospholane compounds are commercially available, for example, from Sigma-Aldrich, Inc. or Strem Chemicals. Exemplary phospholane compounds are shown in Table 2.

**Table 2 - Phospholane Compounds**

| Chemical Name | Structure |
|---|---|
| (-)-1,2-Bis[(2*R*,5*R*)-2,5-diethylphospholano]benzene | 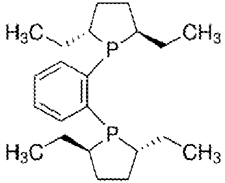 |
| (+)-1,2-Bis[(2*S*,5*S*)-2,5-diethylphospholano]benzene | 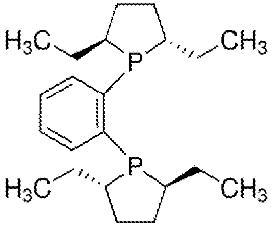 |
| (-)-1,2-Bis[(2S,5S)-2,5-diethylphospholano]ethane | 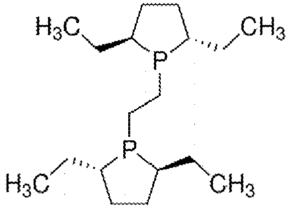 |
| (-)-1,2-Bis[(2*S*,5*S*)-2,5-diisopropylphospholano]benzene | 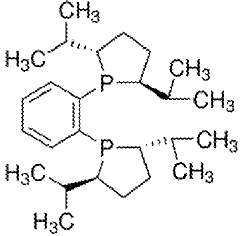 |
| (+)-1,2-Bis[(2R,5R)-2,5-diisopropylphospholano]benzene | 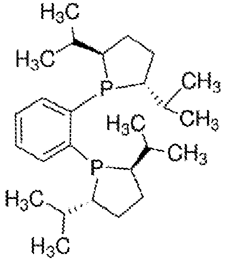 |
| 1,2-Bis[(2R,5R)-2,5-diisopropylphospholano]ethane | 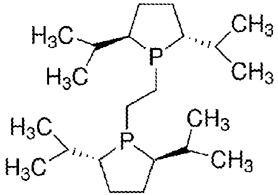 |
| 1,2-Bis((2S,5S)-2,5-di-i-propylphospholano)ethane | 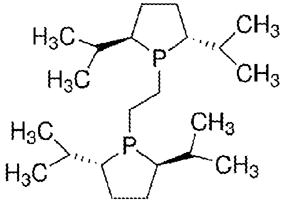 |
| (-)-1,2-Bis[(2R,5R)-2,5-dimethylphospholano]benzene | 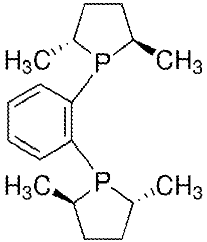 |
| (+)-1,2-Bis[(2S,5S)-2,5-dimethylphospholano]benzene | 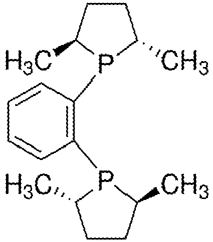 |
| (-)-1,2-Bis((2R,5R)-2,5-diphenylphospholano)ethane | 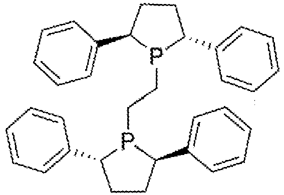 |
| 1,2-Bis[(2R,5R)-2,5-dimethylphospholano]benzene monoxide | 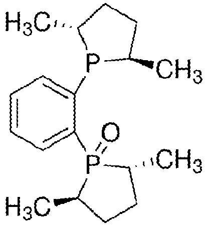 |
| 1,2-Bis[(2S,5S)-2,5-dimethylphospholano]benzene monoxide | 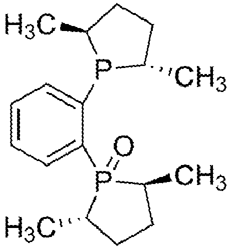 |

The rhodium metal precursor and bisphospholane compound are present in relative amounts sufficient to provide a molar ratio of bisphospholane compound : rhodium metal of 0.5:1 to 3:1, alternatively, 0.8:1 to 1.5:1.

Alternatively, the rhodium bisphospholane catalyst may have formula: 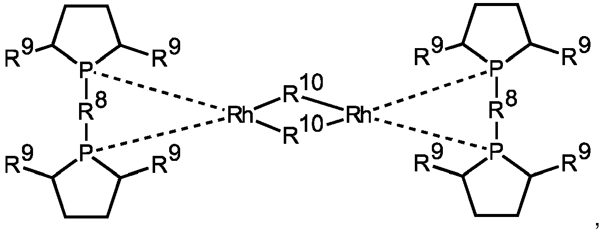 where each R⁸ is a divalent hydrocarbon group and each R⁹ is independently a monovalent hydrocarbon group of 1 to 12 carbon atoms as described above. The rhodium bisphospholane catalyst of this formula is exemplified by: 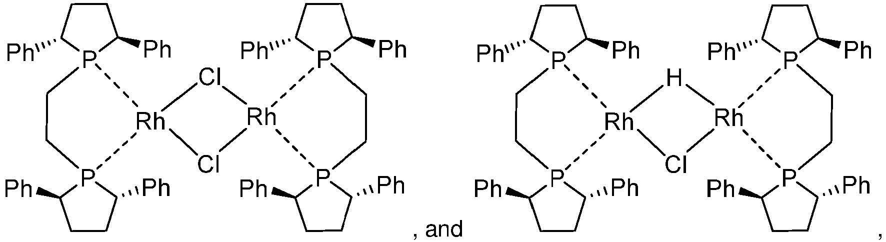 where Ph represents a phenyl group. Such a catalyst may be prepared by reacting a rhodium metal precursor, such as hydroxy(cyclooctadiene)rhodium(I) dimer and a bisphospholane compound such as (-)-1,2-Bis((2R,5R)-2,5-diphenylphospholano)ethane.

Alternatively, the rhodium bisphospholane catalyst may have formula: 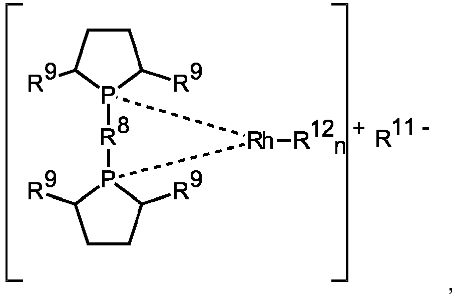 where R⁸ , R⁹, R¹¹, R¹² and subscript n are as described above.

Starting material D) a hydrogen acceptor may optionally be added during step 1) of the method described herein. Exemplary hydrogen acceptors include alkenes such as tert-butyl ethylene, heptene, or hexene; and cycloalkenes, such as cyclohexene, cycloheptene, cyclooctene, or norbornene. The hydrogen acceptor may be added in an amount of 0 to 10:1 molar equivalents of hydrogen acceptor based on the amount of starting material A) (D:A ratio). Alternatively, D:A ratio may be 1.2:1 to 2:1.

Suitable solvents include hydrocarbon solvents and/or ethers. Examples of suitable hydrocarbon solvents include hexane and/or pentane. Examples of suitable ethers include, tetrahydrofuran,1,4-dioxane, diethylether, and/or 1,2-dimethoxyethane can be used. The amount of solvent may be 0 to 100 parts based on the weight of starting material A), alternatively 0 to 10 parts.

The method described above produces a reaction product comprising an arylalkoxysilane. The arylalkoxysilane has formula: 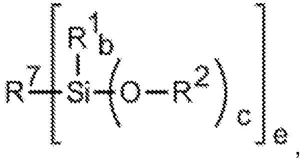 where R¹ and R², and subscripts b and c are as described above. Each R⁷ is independently an aromatic group derived from starting material B) (e.g., aryl or heteroaryl group), and subscript e ≥ 1. Alternatively, subscript e is 1 to 2. Alternatively, subscript e = 1. Alternatively, subscript e = 2. In the method described above, when the aromatic compound has formula B1), then the arylalkoxysilane is exemplified by: (i) phenyldimethylethoxysilane; (ii) xylyldimethylethoxysilane; (iii) 3-methoxy-5-methylphenyl,dimethyl,ethoxysilane; (iv) phenyl,methyl,diethoxysilane; (v) fluorophenyl,dimethyl,ethoxysilane; (vi) 3,5-bis(trifluoromethyl)phenyl,dimethyl,ethoxysilane; (vii) 1,3-benzodioxole,dimethyl,ethoxysilane; (viii) chlorophenyl,dimethyl,ethoxysilane; (ix) bromophenyl,dimethyl,ethoxysilane; and (ix) phenyldimethylmethoxysilane. Alternatively, when the aromatic compound has formula B2), as described above, then the arylalkoxysilane is exemplified by: (i) 2-(ethoxydimethylsilyl)-1-methyl-1*H*-pyrrole; (ii) 2-(ethoxydimethylsilyl)furan; (iii) 2-(ethoxydimethylsilyl)thiophene; (iv)1-methyl-2-(ethoxydimethylsilyl)-1*H*-indole; (v) 2-(ethoxydimethylsilyl)benzofuran; (vi) 5-methoxy-2-(ethoxydimethylsilyl)benzofuran; (vii) 2-(diethoxymethylsilyl)benzofuran; (viii) 2-(methoxydimethylsilyl)furan; (ix) 2-(ethoxydimethylsilyl)-5-methylfuran; (x) 2,5-bis(ethoxydimethylsilyl)furan; and (xi) 2-(diethoxymethyl)-5-methyfuran. Alternatively, the arylalkoxysilane may be selected from the group consisting of: 2-(ethoxydimethylsilyl)-1-methyl-1*H*-pyrrole and 1-methyl-2-(ethoxydimethylsilyl)-1*H-*indole. Alternatively, the arylalkoxysilane may be selected from the group consisting of 2-(ethoxydimethylsilyl)benzofuran; 5-methoxy-2-(ethoxydimethylsilyl)benzofuran; 2-(diethoxymethylsilyl)benzofuran; 2-(ethoxydimethylsilyl)-5-methylfuran; 2,5-bis(ethoxydimethylsilyl)furan; and 2-(diethoxymethyl)-5-methyfuran.

Alternatively, in the arylalkoxysilane of formula: 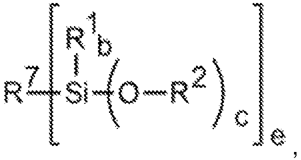 each R¹ is independently an alkyl group of 1 to 18 carbon atoms, each R² is independently an alkyl group of 1 to 4 carbon atoms, subscript b has an average value of 1 to 2, subscript c has an average value of at least 1, with the proviso that a quantity (b + c) = 3; subscript e ≥ 1, and each R⁷ is a pyrrolyl or indolyl group. Alternatively, each R¹ has 1 to 12 carbon atoms, alternatively 1 to 6 carbon atoms, alternatively 1 to 4 carbon atoms; and alternatively each R¹ is methyl or ethyl. Alternatively, each R² has 1 to 12 carbon atoms, alternatively 1 to 6 carbon atoms, alternatively 1 to 4 carbon atoms; and alternatively each R² is methyl or ethyl. Alternatively, each R⁷ is a 1-methyl-1*H-*pyrrole group or 1-methyl-1*H*-indole group. Arylalkoxysilanes of this formula include 2-(ethoxydimethylsilyl)-1-methyl-1*H*-pyrrole and 1-methyl-2-(ethoxydimethylsilyl)-1*H-*indole.

Alternatively, in the arylalkoxysilane of formula: 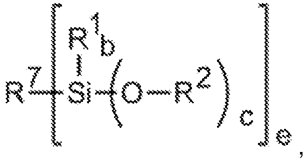 each R¹ is independently an alkyl group of 1 to 18 carbon atoms, each R² is independently an alkyl group of 1 to 4 carbon atoms, subscript b has an average value of 1 to 2, subscript c has an average value of at least 1, with the proviso that a quantity (b + c) = 3; subscript e ≥ 1, and each R⁷ is a substituted furyl group, i.e., a furyl group wherein one carbon atom is bonded to the silicon atom shown in the formula above and at least one other carbon atom in the ring is bonded to a substituent other than hydrogen, *i.e.,* in the aromatic compound of formula B2) above, at least one R⁴ is not a hydrogen atom and/or two of R⁴, together with any atoms to which they are bonded, are joined together to form a fused ring structure. Alternatively, in this formula R⁷ is selected from the group consisting of benzofuran, 5-methyl furan, and 5-methoxy benzofuran. In this embodiment, the arylalkoxysilane is exemplified by 2-(ethoxydimethylsilyl)benzofuran; 5-methoxy-2-(ethoxydimethylsilyl)benzofuran; 2-(diethoxymethylsilyl)benzofuran; 2-(ethoxydimethylsilyl)-5-methylfuran; 2,5-bis(ethoxydimethylsilyl)furan; and 2-(diethoxymethyl)-5-methyfuran.

### EXAMPLES

These examples are intended to illustrate some embodiments of the invention and should not be interpreted as limiting the scope of the invention set forth in the claims. All air-sensitive materials were handled under an argon or nitrogen atmosphere. THF was dried with two successive activated alumina columns and stored under molecular sieves. Other commercially available chemicals were used as received. Conversion was calculated based on NMR analysis or GC-Ms analysis.

**Table 3 - Abbreviations and Definitions**

| Abbreviation | Starting Material Details |
|---|---|
| Cod | 1,5-cyclooctadiene |
| nbd | 2,5-norbornadiene |
| Et | Ethyl |
| Me | Methyl |
| Ph | Phenyl |
| HMe₂Si(OEt) | Dimethylethoxysilane |
| HMe₂Si(OMe) | Dimethylmethoxysilane |
| HMeSi(OEt)₂ | Methyldiethoxysilane |
| [Rh(ethylene)₂Cl]₂ | Di-µ-chlorotetraethylene dirhodium(I) |
| | 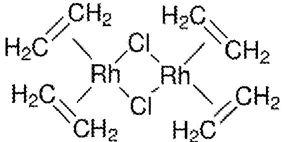 |
| [Rh(cod)(OH)]₂ | Hydroxy(cyclooctadiene)rhodium(I) dimer |
| | 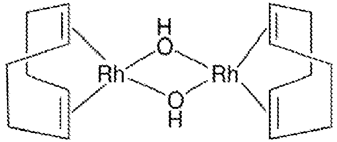 |
| [Rh(nbd)₂BF₄] | Rhodium bis(norbornadiene) tetrafluoroborate |
| (R,R)-Ph-BPE | (-)-1,2-Bis((2R,5R)-2,5-diphenylphospholano)ethane |
| (S,S)-Ph-BPE | (+)-1,2-Bis((2S,5S)-2-5- diphenylphospholano)ethane |
| [Rh(i-Pr-DuPhos)cod]BF₄ | (+)-1 ,2-Bis((2R,5R)-2,5-di-i-propylphospholano)benzene)1,5-cyclooctadiene) rhodium(I) tetrafluoroborate |
| (*S,S*)-*i*-PrBPE | 1,2-Bis((2S,5S)-2,5-di-i-propylphospholano)ethane |
| THF | Tetrahydrofuran |
| NMR | Nuclear Magnetic Resonance |
| GC | Gas Chromatography |
| MS | Mass spectrophotometry |
| RT | Room temperature of 25°C |
| H | Hour |
| mg | Milligrams |
| mL | Milliliters |
| mol | Moles |
| mmol | Millimoles |

[(Ph-BPE)Rh(*µ*-Cl)]₂ was prepared according to this Reference Example 1. To a solution of [Rh(ethylene)₂Cl]₂ (156 mg, 0.4 mmol) in THF, (-)-1,2-Bis((2R,5R)-2,5-diphenylphospholano)ethane ((R,R)-Ph-BPE) in THF (400 mg, 0.79 mol) was slowly added. After stirring at room temperature for 3 hours, the filtration of the reaction mixture gave a deep orange solution. Removal of volatiles under vacuum followed by trituration with hexanes gave yellowish orange solids. Recrystallization of products by layering hexanes onto benzene solution afforded [(Ph-BPE)Rh(*µ*-Cl)]₂ as orange crystals. 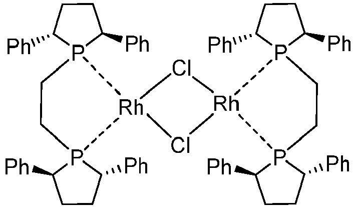 ¹H NMR (400 MHz, CDCl₃): δ 7.98 (d, 8H, *J* = 7.4 Hz), 7.43 (t, 8H, *J* = 6.8 Hz), 7.35-7.31 (m, 4H), 7.16-7.01 (m, 20H), 4.41-3.35 (m, 4H), 2.59-2.52 (m, 4H), 2.46-2.36 (m, 4H), 2.03-1.84 (m, 8H), 1.63-1.53 (m, 4H), 0.50-0.26 (m, 8H). ³¹P NMR (CDCl₃): δ 106.0, 104.8.

[(Ph-BPE)Rh(µ-H)(µ-Cl)Rh(Ph-BPE)] was prepared according to this Reference Example 2. To a benzene solution (10 ml) of the [(Ph-BPE)Rh(*µ*-Cl)]₂ prepared in Reference Example 1 (260 mg, 0.2 mmol), HMe₂Si(OEt) (2.8 ml) was added. After stirring at 100 °C for 10 hours, volatiles were removed under vacuum. Recrystallization of products by layering hexanes onto benzene solution afforded [(Ph-BPE)Rh(µ-H)(µ-CI)Rh(Ph-BPE)] as orange crystals. 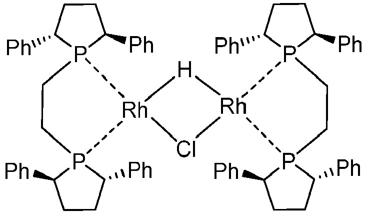 ¹H NMR (400 MHz, CDCl₃): δ 8.02 (d, 8.0Hz, 4H, Ph), 7.93 (d, 8.0 Hz, 4H, Ph), 7.51 (t, 7.6Hz, 4H, Ph), 7.37 (t, 7.4Hz, 2H, Ph), 6.95-7.23 (m, 22H, Ph), 6.93 (t, 7.4Hz, 4H, Ph), 4.57 (m, 2H), 4.06 (m, 2H), 2.81 (m, 2H), 2.64 (m, 2H), 2.49 (m, 2H), 2.35 (m, 2H), 1.85-2.14 (m, 8H), 1.71 (br q, 4H), 0.80-0.95 (br m, 4H), 0.01 (m, 4H), -7.91 (br m, 1H, Rh*H*). ³¹P NMR (161.84 MHz, CDCl₃): δ 103.8 (m), 102.6 (m), 99.9 (m), 98.8 (m).

In this example 1, phenyldimethylethoxysilane 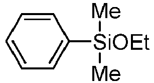 was prepared as follows. An oven-dried vial was charged with [(Ph-BPE)Rh(*µ*-Cl)]₂ (6.5 mg, 0.5 mol %), benzene (1 mL), and cyclohexene (99 mg, 1.2 equiv.). After stirring for 1 h at 100 °C, the reaction mixture was cooled to RT. To the mixture, HSiMe₂(OEt) (104 mg, 1 mmol) was added. The reaction mixture was allowed to stir for 20 hours at 100 °C (>98% conversion, 94% yield by ¹H NMR). The resulting mixture was concentrated and purified by silica gel chromatography affording the desired product PhMe₂Si(OEt) as a colorless liquid (88 mg, 49% yield). Note that the product is decomposed on silica gel. For arenes which have low boiling point (<110 °C), clean product can be obtained after following workup procedure: the evaporation of the crude mixture, dissolving the residue in hexane, filtration through a plug of Celite, and concentration of filtrate. ¹H NMR (400 MHz, CDCl₃): δ 7.61-7.58 (m, 2H), 7.41-7.35 (m, 3H), 3.68 (q, 2H, *J =* 7.0 Hz), 1.19 (t, 3H, *J* = 7.0 Hz), 0.39 (s, 6H) ²⁹Si NMR (79.4 MHz, CDCl₃): δ 7.0

In this comparative example 1, Rh/Bis(biarylphosphine)-catalyzed C-H silylation with HSiMe₂(OEt) was performed. An oven-dried vial was charged with [Rh(cod)OH]₂ (2.3 mg, 0.005 mol), (R)-(+)-2,2'-Bis[di(3,4,5-trimethoxyphenyl)phenyl]phosphino]-6,6'-dimethoxy-1,1'-biphenyl with formula 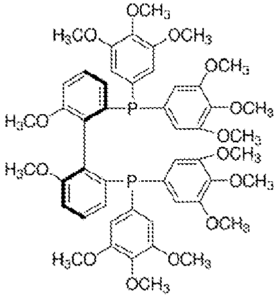 (12.7 mg, 0.011 mmol) and benzene (1 mL). To the mixture, HSiMe₂(OEt) (104 mg, 1 mmol) and cyclohexene (99 mg, 1.2 equiv.) were added. The reaction mixture was allowed to stir for 20 hours at 80 °C and the crude product mixture was analyzed PhMe₂Si(OEt): < 1 % yield by GC-Ms).

In this example 2, phenyldimethylethoxysilane, PhMe₂Si(OEt), was prepared as follows. In an oven-dried vial, [Rh(cod)(OH)]₂ (4.6 mg, 0.01 mmol) and (*S,S*)-*i*-Pr-BPE (7.4 mg, 0.02 mmol) were placed. Benzene (1 ml), HMe₂Si(OEt) (104 mg, 1mmol) and cyclohexene (1.1 mmol) were added to the vial. The reaction mixture was allowed to stir for 24 hours at 80 °C. GC-Ms analysis shows HMe₂Si(OEt) disappeared completely. ¹H NMR and GC-Ms analysis confirms formation of PhMe₂Si(OEt) (GC-Ms yield: 85 %). This example demonstrates that a catalyst may be formed in situ by reaction of a rhodium precursor with a bisphospholane ligand.

In this example 3, a xylyldimethylethoxysilane of formula 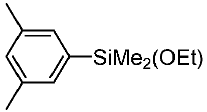 was prepared as follows. In an oven-dried vial, [Rh(cod)(OH)]₂ (4.6 mg, 0.01 mmol) and (*S,S*)-*i*-Pr-BPE (7.4 mg, 0.02 mmol) were placed. *m*-Xylene (1 ml), HMe₂Si(OEt) (104 mg, 1mmol) and cyclohexene (1.1 mmol) were added to the vial. The reaction mixture was allowed to stir for 24 hours at 80 °C (GC-Ms yield: 38 %). The resulting mixture was concentrated and purified by silica gel chromatography affording the desired product as a colorless liquid. ²⁹Si NMR (79.4 MHz, CDCl₃): δ 7.2 (s) ¹H NMR (400 MHz, CDCl₃): δ 7.19 (br, 2H, xylyl), 7.04 (br, 1H, xylyl), 3.68 (q, 6.9 Hz, 2H, OC*H*₂CH₃), 2.33 (s, C*H*₃-Ph), 1.19 (t, 7.0 Hz, 3H, OCH₂C*H*₃), 0.36 (s, 6H, C*H*₃Si).

In this example 4, 3-methoxy-5-methylphenyl,dimethyl,ethoxysilane of formula 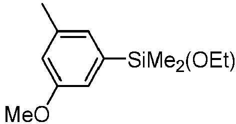 was prepared as follows. In an oven-dried vial, a mixture of [Rh(cod)(OH)]₂ (4.6 mg, 0.01 mmol) and (*S,S*)-*i*-Pr-BPE (7.4 mg, 0.02 mmol) was prepared. 3-methylanisole (1 ml), HMe₂Si(OEt) (1mmol, 0.14 ml) and cyclohexene (1.1 mmol) were added to the vial. The reaction mixture was allowed to stir for 24 hours at 80 °C. GC-Ms analysis confirms formation of (3-methoxy-5-methylphenyl)Me₂Si(OEt) (GC-Ms yield: 67 %).

In this example 5, phenyl,methyl,diethoxysilane of formula 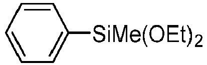 was prepared as follows. In an oven-dried vial, [Rh(cod)(OH)]₂ (4.6 mg, 0.01 mmol) and (*S,S*)-*i*-Pr-BPE (7.4 mg, 0.02 mmol) were placed. Benzene (1 ml), HMeSi(OEt)₂ (134 mg, 1mmol) and cyclohexene (1.1 mmol) were added to the vial. The reaction mixture was allowed to stir for 24 hours at 80 °C. GC-Ms analysis confirms formation of PhMeSi(OEt)₂ (GC-Ms yield: 20 %).

### Reference Example 3 - Aryl functional alkoxysilanes prepared using [(Ph-BPE)Rh(µ-Cl)]₂

Examples 6 to 20 were conducted using the following procedure. An oven-dried vial was charged with [(Ph-BPE)Rh(*µ*-Cl)]₂ (6.5 mg, 0.5 mol %), an aromatic compound (0.5 mL or 1 mL), and cyclohexene (99 mg, 1.2 equiv.). After stirring for 1 h at 100 °C, the reaction mixture was cooled to RT. To the mixture, an amount of an alkoxysilane was added. The reaction mixture was allowed to stir for 20 h at 100°C. The resulting product was evaluated by ¹H NMR. The aromatic compound used and whether cyclohexene was added are shown below in Table 4. The ¹H NMR results are shown in Table 5.

**Table 4 - Preparation of aryl functional alkoxysilanes according to the method of Reference Example 3**

| Example | Aromatic compound | Amount of Aromatic compound (mL) | Cyclohexene added? | Alkoxysilane | Amount of Alkoxysilane (mg) |
|---|---|---|---|---|---|
| 6 | Fluorobenzene | 1 | Yes | HSiMe₂(OEt) | 104 |
| 7 | 1,3-bis(trifluoromethyl)benzene | 1 | Yes | HSiMe₂(OEt) | 104 |
| 8 | 1,3-benzodioxole | 1 | Yes | HSiMe₂(OEt) | 104 |
| 9 | Chlorobenzene | 1 | Yes | HSiMe₂(OEt) | 104 |
| 10 | Bromobenzene | 1 | Yes | HSiMe₂(OEt) | 104 |
| 11 | 1-methylpyrrole | 1 | Yes | HSiMe₂(OEt) | 104 |
| 12 | Furan | 1 | Yes | HSiMe₂(OEt) | 104 |
| 13 | Thiofuran | 1 | Yes | HSiMe₂(OEt) | 104 |
| 14 | Methyl indole | 1 | Yes | HSiMe₂(OEt) | 104 |
| 15 | Benzofuran | 1 | Yes | HSiMe₂(OEt) | 104 |
| 16 | Methoxybenzofuran | 148 mg in 0.5 ml THF | Yes | HSiMe₂(OEt) | 104 |
| 17 | N-methylindole | 1 | No | HSiMe₂(OEt) | 104 |
| 18 | Benzofuran | 0.5 | Yes | HSiMe(OEt)₂ | 134 |
| 19 | Furan | 1 | Yes | HSiMe₂(OMe) | 90 |
| 20 | Benzene | 1 | Yes | HSiMe₂(OMe) | 90 |

**Table 5 - Analysis of aryl functional alkoxysilanes prepared according to the method of Reference Example 3**

| Example | Product | | NMR Results | | |
|---|---|---|---|---|---|
| | | | Yield (%) | Conversion (%) | 400 MHz, CDCl₃ |
| 6 | Fluorophenyl,dimethyl,ethoxysilane | 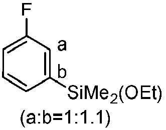 | 92 | >98 | δ 7.57-7.49 (m, 0.69H), 7.40-7.32 (m, 1.27H), 7.25 (dd, 0.43H, *J* = 9.3, 2.6 Hz), 7.15 (t, 0.51 H, *J*= 7.2 Hz), 7.09-7.03 (m, 0.59H), 6.99 (t, 0.51 H, *J* = 8.2 Hz), 3.74 (q, 1.1 H, *J* = 7.0 Hz), 3.68 (q, 0.9H, *J* = 6.8 Hz), 1.23-1.16 (m, 3H), 0.42 (s, 3.1H), 0.38 (s, 2.9H) |
| | 3,5-bis(trifluoromethyl)phenyl,dimethyl,ethoxysilane | | | | |
| 7 | 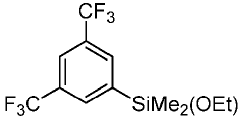 | | 91 | Not reported | Not reported |
| | 1,3-benzodioxole,dimethyl,ethoxysilane | | | | |
| 8 | 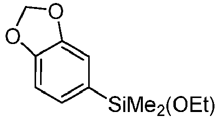 | | 83 | Not reported | Not reported |
| | Chlorophenyl,dimethyl,ethoxysilane | | | | |
| 9 | 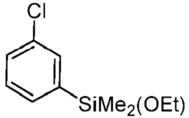 | | 60 | Not reported | Not reported |
| | Bromophenyl,dimethyl,ethoxysilane | | | | |
| 10 | 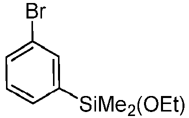 | | 83 | Not reported | Not reported |
| | 2-(ethoxydimethylsilyl)-1-methyl-1 H-pyrrole | | | | δ 6.83-6.82 (m, 1H), 6.47-6.45 (m, 1H), 6.18-6.16 (m, 1 H), 3.80 (s, 3H), 3.66 (q, 2H, *J* = 7.0 Hz), 1.18 (t, 3H, *J* = 7.0 Hz), 0.40 (s, 6H). |
| 11 | 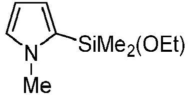 | | 85 | >98 | |
| 12 | 2-(ethoxydimethylsilyl)furan | 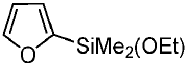 | 90 | >98 | δ 7.65-7.64 (m, 1 H), 6.72 (t, 1 H, *J* = 2.8 Hz), 6.39-6.38 (m, 1H), 3.69 (q, 2H, *J* = 7.0 Hz), 1.15 (t, 3H, *J* = 7.0 Hz), 0.36 (s, 6H) |
| 13 | 2-(ethoxydimethylsilyl)thiophene | 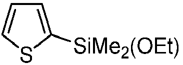 | 36 | Not reported | δ 7.62 (dd, 1H, *J* = 4.6, 0.9 Hz), 7.35 (dd, 1H, *J* = 3.3, 0.8 Hz), 7.20 (dd, 1H, *J* = 4.7, 3.3 Hz), 3.68 (q, 2H, *J* = 7.0 Hz), 1.17 (t, 3H, *J* = 7.0 Hz), 0.43 (s, 6H) |
| | 1-methyl-2-(ethoxydimethylsilyl)-1 H-indole | | | | |
| 14 | 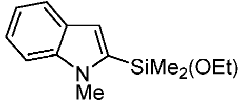 | | 83 | Not reported | Not reported |
| | 2-(ethoxydimethylsilyl)benzofuran | | | | |
| 15 | 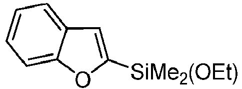 | | 72 | Not reported | Not reported |
| | 5-methoxy-2-(ethoxydimethylsilyl)benzofuran | | | | |
| 16 | 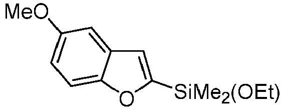 | | 83 | Not reported | Not reported |
| | 1-methyl-2-(ethoxydimethylsilyl)-1 H-indole | | | | |
| 17 | 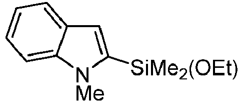 | | 74 | Not reported | Not reported |
| | 2-(diethoxymethylsilyl)benzofuran | | | | |
| 18 | 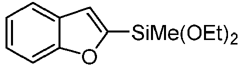 | | 67 | >98 | Not reported |
| | 2-(methoxydimethylsilyl)furan | | | | δ 7.66 (d, 1H, *J* = 1.6 Hz), 6.75 (d, 1H, *J* = 3.2 Hz), 6.40 (m, 1H), 3.45 (s, 3H), 0.37 (s, 6H) |
| 19* | 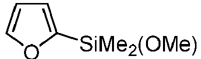 | | 98 | >98 | |
| 20 | phenyldimethylmethoxysilane | 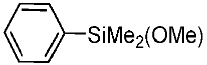 | 11 | Not Reported | Not Reported |

| | | | | | |
|---|---|---|---|---|---|
| *In example 19, the product was concentrated and purified by silica gel chromatography before NMR analysis. Additional NMR analysis was also conducted: ¹³C NMR (100 MHz, CDCl₃): δ 157.5, 146.9, 121.0, 109.3, 50.7, -2.7; ²⁹Si NMR : 0.6 (s). | | | | | |

In this example 21, a 2-(ethoxydimethylsilyl)-5-methylfuran of formula 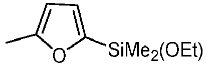 was prepared as follows. In an oven-dried vial, [(Ph-BPE)Rh(µ-H)(µ-Cl)Rh(Ph-BPE)] (6.3 mg, 0.5 mol%) was placed. 2-methylfuran (1 ml), HMe₂Si(OEt) (0.14 ml, 1mmol) and cyclohexene (1.1 mmol) were added to the vial. The reaction mixture was allowed to stir for 20 hours at 80 °C. ¹H NMR analysis confirms formation of the target compound (NMR yield: 95 %). ¹H NMR (400 MHz, CDCl₃): δ 6.63 (m, 1H, *furyl*)*,* 5.98 (m, 1H, *furyl*)*,* 3.70 (q, 7.1Hz, 2H, OC*H*₂CH₃), 2.33 (dd, 3H, C*H*₃-furyl), 1.18 (t, 7.0Hz, 3H, OCH₂C*H*₃), 0.36 (s, 6H, Si(C*H*₃)₂) ²⁹Si NMR (79.4 MHz, CDCl₃): δ -2.4 (s)

In this example 22, a 2,5-bis(ethoxydimethylsilyl)furan of formula 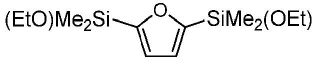 was prepared as follows. In an oven-dried vial, [(Ph-BPE)Rh(µ-H)(µ-Cl)Rh(Ph-BPE)] (6.3 mg, 0.5 mol%) was placed. Furan (1 ml), HMe₂Si(OEt) (1mmol) and cyclohexene (1.1 mmol) were added to the vial. The reaction mixture was allowed to stir for 20 hours at 80 °C. Volatiles were removed under vacuum. To the product mixture, HMe₂Si(OEt) (1mmol), THF (0.1 ml) and cyclohexene (1.1 mmol) were added and stirred for 20 hrs at 80 °C. Removal of volatiles afforded yellow liquid. ¹H NMR (400 MHz, CDCl₃): δ 6.73 (s, 2H, furyl), 3.70 (q, 6.9Hz, 4H, OC*H*₂CH₃), 1.16 (t, 7.0Hz, 6H, OCH₂C*H*₃), 0.38 (s, 12H, SiC*H*₃) ¹³C NMR (100 MHz, CDCl₃): δ 162.9 (s), 120.5 (s), 59.1 (s), -1.84 (s) ²⁹Si NMR (79.4 MHz, CDCl₃): δ -1.8 (s)

In this example 23, a 2-(diethoxymethyl)-5-methylfuran of formula 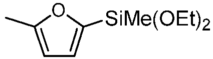 was prepared as follows. In an oven-dried vial, [(Ph-BPE)Rh(µ-H)(µ-Cl)Rh(Ph-BPE)] (6.3 mg, 0.5 mol%) was placed. 2-methylfuran (1 ml), HMeSi(OEt)₂ (134 mg, 1mmol) and cyclohexene (1.1 mmol) were added to the vial. The reaction mixture was allowed to stir for 20 hours at 100 °C. ¹H NMR analysis confirms formation of the target compound (NMR yield: 93 %). ¹H NMR (400 MHz, CDCl₃): δ 6.71 (dq, 2.8Hz and 0.4Hz, 1H, *furyl*)*,* 5.98 (dq, 3.2Hz and 1.1Hz, 1H, *furyl*)*,* 3.84 (q, 7.1Hz, 4H, OC*H*₂CH₃), 2.33 (m, 3H, C*H*₃-furyl), 1.24 (t, 7.0Hz, 6H, OCH₂C*H*₃), 0.34 (s, 3H, SiC*H*₃) ¹³C NMR (100 MHz, CDCl₃): δ 157.3 (s), 123.4 (s), 59.1 (s), 105.8 (s), 59.0 (s), 18.4 (s), 13.9 (s), -3.8 (s) ²⁹Si NMR (79.4 MHz, CDCl₃): δ -26.3 (s)

In this example 24, phenyl,dimethyl,ethoxysilane of formula 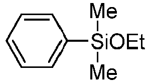 was prepared as follows. An oven-dried vial was charged with [Rh(nbd)₂BF₄] (7.5 mg, 2 mol %), (S,S)-Ph-BPE (11 mg, 2.2 mol %), benzene (1 mL), and cyclohexene (99 mg, 1.2 equiv.). After stirring for 1 h at 100 °C, the reaction mixture was cooled to RT. To the mixture, HSiMe₂(OEt) (104 mg, 1 mmol) was added. The reaction mixture was allowed to stir for 20 hours at 100 °C (27% yield by ¹H NMR).

In this example 25, phenyl, dimethyl,ethoxysilane of formula 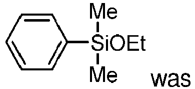 prepared as follows. An oven-dried vial was charged with [Rh(*i*-Pr-DuPhos)cod]BF₄ (14 mg, 2 mol %), benzene (1 mL), and cyclohexene (99 mg, 1.2 equiv.). After stirring for 1 h at 80 °C, the reaction mixture was cooled to RT. To the mixture, HSiMe₂(OEt) (104 mg, 1 mmol) was added. The reaction mixture was allowed to stir for 20 hours at 80 °C (9% yield by ¹H NMR).

### Industrial Applicability

The examples above show that the dehydrogenative silylation method described herein can be used to produce various arylalkoxysilanes. The rhodium bisphospholane catalyst may provide the benefit of allowing an alkoxysilane having a silicon bonded hydrogen atom to be used as a starting material to prepare the arylalkoxysilanes. Because the starting material and product contain at least one alkoxy group bonded to silicon, the arylalkoxysilane produced by the method is reactive with, e.g., polyorganosiloxanes having silicon bonded hydrogen atoms or silicon bonded hydrolyzable groups. The arylalkoxysilanes produced by the method described herein may be useful as endblockers for such polyorganosiloxanes.

### Definitions and Usage of Terms

All amounts, ratios, and percentages are by weight unless otherwise indicated. The articles 'a', 'an', and 'the' each refer to one or more, unless otherwise indicated. The disclosure of ranges includes the range itself and also anything subsumed therein, as well as endpoints. For example, disclosure of a range of 2.0 to 4.0 includes not only the range of 2.0 to 4.0, but also 2.1, 2.3, 3.4, 3.5, and 4.0 individually, as well as any other number subsumed in the range. Furthermore, disclosure of a range of, for example, 2.0 to 4.0 includes the subsets of, for example, 2.1 to 3.5, 2.3 to 3.4, 2.6 to 3.7, and 3.8 to 4.0, as well as any other subset subsumed in the range. Similarly, the disclosure of Markush groups includes the entire group and also any individual members and subgroups subsumed therein. For example, disclosure of the Markush group a hydrogen atom, an alkyl group, an alkenyl group, or an aryl group, includes the member alkyl individually; the subgroup alkyl and aryl; and any other individual member and subgroup subsumed therein.

"Alkyl" means a saturated monovalent hydrocarbon group. Alkyl is exemplified by, but not limited to, methyl, ethyl, propyl (*e.g.,* iso-propyl and/or n-propyl), butyl (*e.g.,* isobutyl, n-butyl, tert-butyl, and/or sec-butyl), pentyl (e.g., isopentyl, neopentyl, and/or tert-pentyl); hexyl, heptyl, octyl, nonyl, and decyl, as well as branched saturated monovalent hydrocarbon groups of 6 or more carbon atoms.

"Alkenyl" means a monovalent hydrocarbon group containing a double bond. Alkenyl groups are exemplified by, but not limited to, ethenyl, propenyl (*e.g*., isopropenyl and/or n-propenyl), butenyl (*e.g*., isobutenyl, n-butenyl, tert-butenyl, and/or sec-butenyl), pentenyl (*e.g*., isopentenyl, n-pentenyl, and/or tert-pentenyl), hexenyl, heptenyl, octenyl, nonenyl, and decenyl, as well as such branched groups of 6 or more carbon atoms.

"Alkynyl" means a monovalent hydrocarbon group containing a triple bond. Alkynyl groups are exemplified by, but not limited to, ethynyl, propynyl (*e.g*., iso-propynyl and/or n-propynyl), butynyl (*e.g*., isobutynyl, n-butynyl, tert-butynyl, and/or sec-butynyl), pentynyl (*e.g*., isopentynyl, n-pentynyl, and/or tert-pentynyl), hexynyl, heptynyl, octynyl, nonynyl, and decynyl, as well as such branched groups of 6 or more carbon atoms.

"Aryl" means a cyclic, fully unsaturated, hydrocarbon group. Aryl is exemplified by, but not limited to, cyclopentadienyl, phenyl, anthracenyl, and naphthyl. Monocyclic aryl groups may have 5 to 9 carbon atoms, alternatively 6 to 7 carbon atoms, and alternatively 5 to 6 carbon atoms. Polycyclic aryl groups may have 10 to 18 carbon atoms, alternatively 10 to 14 carbon atoms, and alternatively 12 to 14 carbon atoms.

"Aralkyl" means an alkyl group having a pendant and/or terminal aryl group or an aryl group having a pendant alkyl group. Exemplary aralkyl groups include tolyl, xylyl, benzyl, phenylethyl, phenyl propyl, and phenyl butyl.

"Carbocycle" and "carbocyclic" each mean a hydrocarbon ring. Carbocycles may be monocyclic or alternatively may be fused, bridged, or spiro polycyclic rings. Monocyclic carbocycles may have 3 to 9 carbon atoms, alternatively 4 to 7 carbon atoms, and alternatively 5 to 6 carbon atoms. Polycyclic carbocycles may have 7 to 18 carbon atoms, alternatively 7 to 14 carbon atoms, and alternatively 9 to 10 carbon atoms. Carbocycles may be saturated or partially unsaturated.

"Cycloalkyl" means saturated carbocycle. Monocyclic cycloalkyl groups are exemplified by cyclobutyl, cyclopentyl, and cyclohexyl.

Collectively, the term "monovalent hydrocarbon group" includes alkyl, alkenyl, aryl, aralkyl, and carbocyclic groups, as defined above.

"Divalent hydrocarbon group" includes alkylene groups such as ethylene, propylene (including isopropylene and n-propylene), and butylene (including n-butylene, t-butylene and isobutylene); and pentylene, hexylene, heptylene, octylene, and branched and linear isomers thereof; arylene groups such as phenylene, e.g., ortho-phenylene; and alkaralkylene groups such as: 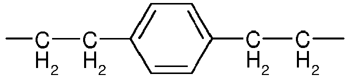 or 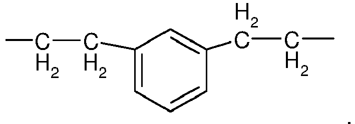 Alternatively, each divalent hydrocarbon group may be ethylene, propylene, butylene or hexylene. Alternatively, each divalent hydrocarbon group may be ethylene or propylene.

"Halogenated hydrocarbon" means a hydrocarbon group as defined above, but where one or more hydrogen atoms bonded to a carbon atom have been formally replaced with a halogen atom. For example, monovalent halogenated hydrocarbon groups can be any one of alkyl, alkenyl, aryl, aralkyl, and carbocyclic groups in which one or more hydrogen atoms bonded to a carbon atom have been replaced with a halogen atom. Monovalent halogenated hydrocarbon groups include halogenated alkyl groups, halogenated carbocyclic groups, and halogenated alkenyl groups. Halogenated alkyl groups include fluorinated alkyl groups such as trifluoromethyl (CF₃), fluoromethyl, trifluoroethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl; and chlorinated alkyl groups such as chloromethyl and 3-chloropropyl. Halogenated carbocyclic groups include fluorinated cycloalkyl groups such as 2,2-difluorocyclopropyl, 2,3-difluorocyclobutyl, 3,4-difluorocyclohexyl, and 3,4-difluoro-5-methylcycloheptyl; and chlorinated cycloalkyl groups such as 2,2-dichlorocyclopropyl, 2,3-dichlorocyclopentyl. Halogenated alkenyl groups include chloro allyl.

"Heterocycle" and "heterocyclic" refer to a ring group comprised of carbon atoms and one or more heteroatoms in the ring. The heteroatom may be N, O, P, S, or a combination thereof. Heterocycles may be monocyclic or alternatively may be fused, bridged, or spiro polycyclic rings. Monocyclic heterocycles may have 3 to 9 member atoms in the ring, alternatively 4 to 7 member atoms, and alternatively 5 to 6 member atoms. Polycyclic heterocycles may have 7 to 17 member atoms, alternatively 7 to 14 member atoms, and alternatively 9 to 10 member atoms. Heterocycles may be saturated or partially unsaturated. A "heteroaryl group" is a fully unsaturated ring group comprised of carbon atoms and one or more heteroatoms in the ring.

"Aromatic compound" refers to a compound having an aryl group and/or a compound having a heteroaryl group.

## Claims

1. A method for forming an arylalkoxysilane by dehydrogenative silylation between an Si-H bond in starting material A) and an aromatic carbon-hydrogen bond in starting material B), where the method comprises:
1) combining, under conditions appropriate to form the arylalkoxysilane, starting materials comprising
A) an alkoxysilane of formula 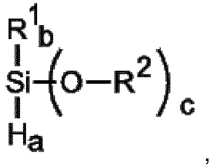 where each R¹ is independently an alkyl group of 1 to 18 carbon atoms, each R² is independently an alkyl group of 1 to 4 carbon atoms, subscript a has an average value of at least 1, subscript b has an average value of 1 to 2, and subscript c has an average value of at least 1, and a quantity (a + b + c) = 4;
B) an aromatic compound having a carbon-hydrogen bond; and
C) a rhodium bisphospholane catalyst.

2. The method of claim 1, where A) the alkoxysilane has formula: 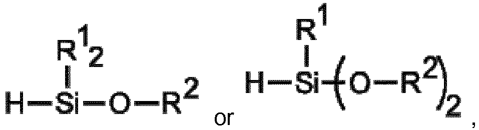 where each R¹ is methyl or ethyl and each R² is methyl or ethyl.

3. The method of claim 1 or claim 2, where B) the aromatic compound has formula 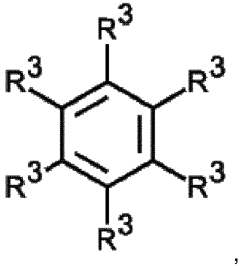 where each R³ is independently a hydrogen atom, a halogen atom, an alkyl group, a halogenated alkyl group, a hydrocarbyloxy group, with the provisos that at least one R³ is hydrogen, and any two of R³, together with any atoms to which they are bonded, are optionally joined together to form a fused ring structure; alternatively B) the aromatic compound is selected from the group consisting of benzodioxole, 3-methylanisole, m-xylene, benzene, bromobenzene, chlorobenzene, fluorobenzene, and 1,3-bis(trifluoromethyl)benzene.

4. The method of claim 1 or claim 2, where B) the aromatic compound has formula 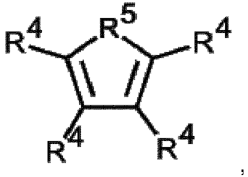 where each R⁴ is independently a hydrogen atom, a halogen atom, an alkyl group, a halogenated alkyl group, hydrocarbyloxy group; and R⁵ is selected from sulfur, oxygen and a nitrogen containing group of formula NR⁶, where each R⁶ is a hydrogen atom or an alkyl group of 1 to 4 carbon atoms, with the provisos that at least one R⁴ is hydrogen, and any two of R⁴, together with any atoms to which they are bonded, are optionally joined together to form a fused ring structure; alternatively B) the aromatic compound is selected from the group consisting of methylfuran, benzofuran, methoxybenzofuran, furan, thiofuran, and methylpyrrole.

5. The method of any one of claims 1 to 4, where the method further comprises, before and/or during step 1), forming C) the rhodium bisphospholane catalyst by combining a rhodium precursor that does not have bisphospholane functionality and a bisphospholane compound of formula 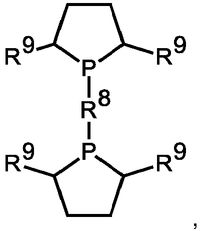 where R⁸ is a divalent hydrocarbon group and each R⁹ is independently a monovalent hydrocarbon group of 1 to 12 carbon atoms.

6. The method of any one of claims 1 to 4, where C) the rhodium bisphospholane catalyst has a formula: 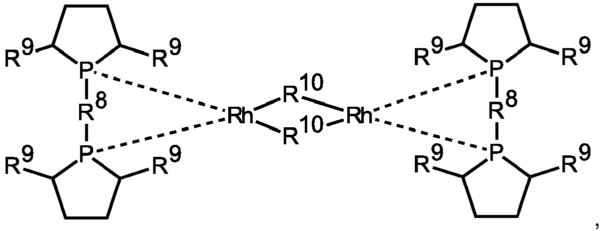 where each R⁸ is a divalent hydrocarbon group and each R⁹ is independently a monovalent hydrocarbon group of 1 to 12 carbon atoms, and each R¹⁰ is independently a negatively charged ligand; alternatively C) the rhodium bisphospholane catalyst is selected from the group consisting of: 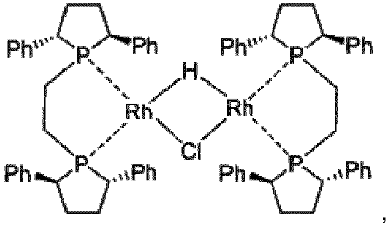 and 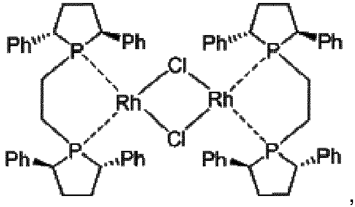 where Ph represents a phenyl group.

7. The method of any one of claims 1 to 4, where C) the rhodium bisphospholane catalyst has a formula: 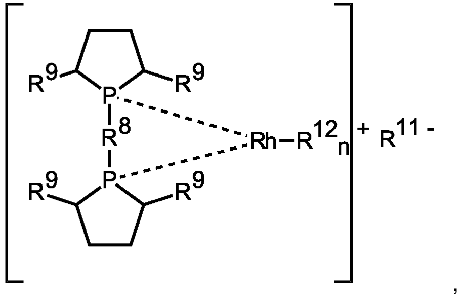 where each R⁸ is a divalent hydrocarbon group, each R⁹ is independently a monovalent hydrocarbon group of 1 to 12 carbon atoms, and each R¹² is independently an alkene or a cycloalkene, each R¹¹ is independently an anion, and subscript n has a value of 1 to 2.

8. The method of any one of claims 1 to 4, where the starting materials further comprise D) a hydrogen acceptor; alternatively, the starting materials further comprise D) the hydrogen acceptor is selected from the group consisting of: tert-butyl ethylene, heptene, hexene, cyclohexene, cycloheptene, cyclooctene, or norbornene.

9. The method of claim 1, where the arylalkoxysilane has formula: 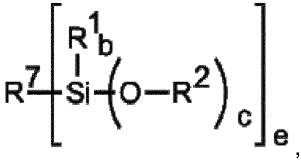 where each R⁷ is independently an aryl group derived from starting material A), and subscript e ≥ 1.

10. The method of claim 3 or 9, where the arylalkoxysilane is selected from the group consisting of: (i) phenyldimethylethoxysilane; (ii) xylyldimethylethoxysilane; (iii) 3-methoxy-5-methylphenyl,dimethyl,ethoxysilane; (iv) phenyl,methyl,diethoxysilane; (v) fluorophenyl,dimethyl,ethoxysilane; (vi) 3,5-bis(trifluoromethyl)phenyl,dimethyl,ethoxysilane; (vii) 1,3-benzodioxole,dimethyl,ethoxysilane; (viii) chlorophenyl,dimethyl,ethoxysilane; (ix) bromophenyl,dimethyl,ethoxysilane; and (ix) phenyldimethylmethoxysilane.

11. The method of claim 4 or 9, where the arylalkoxysilane is selected from the group consisting of: (i) 2-(ethoxydimethylsilyl)-1-methyl-1*H*-pyrrole; (ii) 2-(ethoxydimethylsilyl)furan; (iii) 2-(ethoxydimethylsilyl)thiophene; (iv)1-methyl-2-(ethoxydimethylsilyl)-1*H*-indole; (v) 2-(ethoxydimethylsilyl)benzofuran; (vi) 5-methoxy-2-(ethoxydimethylsilyl)benzofuran;
(vii) 2-(diethoxymethylsilyl)benzofuran; (viii) 2-(methoxydimethylsilyl)furan; (ix) 2-(ethoxydimethylsilyl)-5-methylfuran; (x) 2,5-bis(ethoxydimethylsilyl)furan; and (xi) 2-(diethoxymethyl)-5-methylfuran.

## Patentansprüche

1. Ein Verfahren zum Bilden eines Arylalkoxysilans durch dehydrierende Silylierung zwischen einer Si-H-Bindung in Ausgangsmaterial A) und einer Bindung von aromatischem Kohlenstoff und Wasserstoff in Ausgangsmaterial B), wobei das Verfahren Folgendes beinhaltet:
1) Kombinieren, unter geeigneten Bedingungen zum Bilden des Arylalkoxysilans, von Ausgangsmaterialien, die Folgendes beinhalten:
A) ein Alkoxysilan der Formel 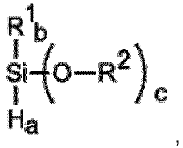 wobei jedes R¹ unabhängig eine Alkylgruppe von 1 bis 18 Kohlenstoffatomen ist, jedes R² unabhängig eine Alkylgruppe von 1 bis 4 Kohlenstoffatomen ist, der Index a einen durchschnittlichen Wert von mindestens 1 aufweist, der Index b einen durchschnittlichen Wert von 1 bis 2 aufweist und der Index c einen durchschnittlichen Wert von mindestens 1 aufweist, und wobei ein Betrag (a + b + c) = 4;
B) eine aromatische Verbindung, die eine Kohlenstoff-Wasserstoff-Bindung aufweist; und
C) einen Rhodiumbisphospholankatalysator.

2. Verfahren gemäß Anspruch 1, wobei A) das Alkoxysilan die folgende Formel aufweist: 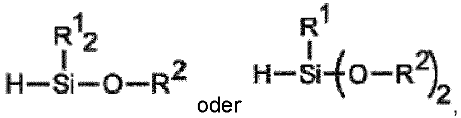 wobei jedes R¹ Methyl oder Ethyl ist und jedes R² Methyl oder Ethyl ist.

3. Verfahren gemäß Anspruch 1 oder Anspruch 2, wobei B) die aromatische Verbindung die folgende Formel aufweist: 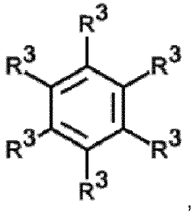 wobei jedes R³ unabhängig ein Wasserstoffatom, ein Halogenatom, eine Alkylgruppe, eine halogenierte Alkylgruppe, eine Hydrocarbyloxygruppe ist, mit den Maßgaben, dass mindestens ein R³ Wasserstoff ist und beliebige zwei R³ zusammen mit beliebigen Atomen, an die sie gebunden sind, optional verknüpft sind, um eine kondensierte Ringstruktur zu bilden; alternativ B) die aromatische Verbindung aus der Gruppe ausgewählt ist, die aus Benzodioxol, 3-Methylanisol, m-Xylen, Benzen, Brombenzen, Chlorbenzen, Fluorbenzen und 1,3-Bis(trifluormethyl)benzen besteht.

4. Verfahren gemäß Anspruch 1 oder Anspruch 2, wobei B) die aromatische Verbindung die folgende Formel aufweist: 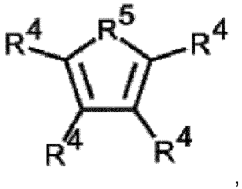 wobei jedes R⁴ unabhängig ein Wasserstoffatom, ein Halogenatom, eine Alkylgruppe, eine halogenierte Alkylgruppe, Hydrocarbyloxygruppe ist;
und R⁵ aus Schwefel, Sauerstoff und einer stickstoffhaltigen Gruppe der Formel NR⁶ ausgewählt ist, wobei jedes R⁶ ein Wasserstoffatom oder eine Alkylgruppe von 1 bis 4 Kohlenstoffatomen ist, mit den Maßgaben, dass mindestens ein R⁴ Wasserstoff ist und beliebige zwei R⁴ zusammen mit beliebigen Atomen, an die sie gebunden sind, optional verknüpft sind, um eine kondensierte Ringstruktur zu bilden; alternativ B) die aromatische Verbindung aus der Gruppe ausgewählt ist, die aus Methylfuran, Benzofuran, Methoxybenzofuran, Furan, Thiofuran und Methylpyrrol besteht.

5. Verfahren gemäß einem der Ansprüche 1 bis 4, wobei das Verfahren ferner vor und/oder während Schritt 1) Folgendes beinhaltet: Bilden C) des Rhodiumbisphospholankatalysators durch Kombinieren eines Rhodiumvorläufers, der keine Bisphospholanfunktionalität aufweist, und einer Bisphospholanverbindung der Formel 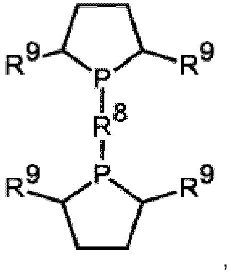 wobei R⁸ eine divalente Kohlenwasserstoffgruppe ist und jedes R⁹ unabhängig eine monovalente Kohlenwasserstoffgruppe von 1 bis 12 Kohlenwasserstoffatomen ist.

6. Verfahren gemäß einem der Ansprüche 1 bis 4, wobei C) der Rhodiumbisphospholankatalysator eine folgende Formel aufweist: 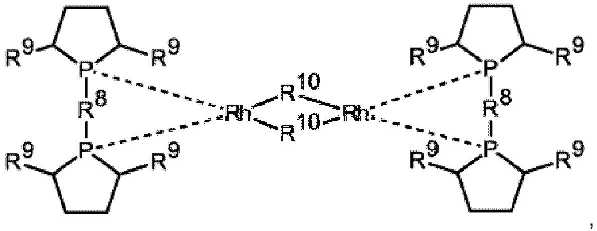 wobei jedes R⁸ eine divalente Kohlenwasserstoffgruppe ist und jedes R⁹ unabhängig eine monovalente Kohlenwasserstoffgruppe von 1 bis 12 Kohlenstoffatomen ist und jedes R¹⁰ unabhängig ein negativ geladener Ligand ist; alternativ C) der Rhodiumbisphospholankatalysator aus der Gruppe ausgewählt ist, die aus Folgendem besteht: 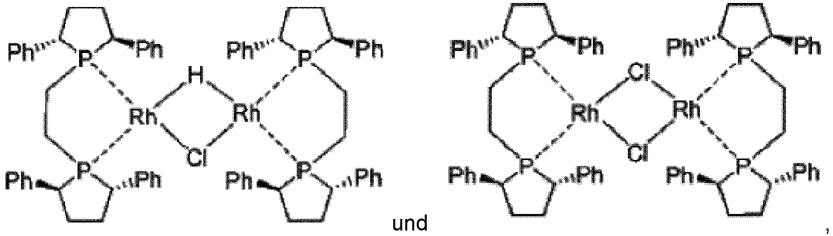 wobei Ph eine Phenylgruppe darstellt.

7. Verfahren gemäß einem der Ansprüche 1 bis 4, wobei C) der Rhodiumbisphospholankatalysator eine folgende Formel aufweist: 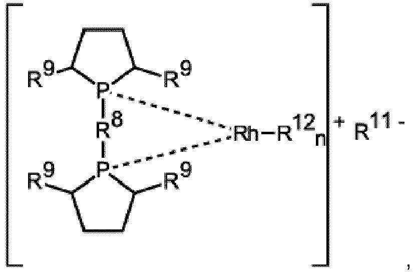 wobei jedes R⁸ eine divalente Kohlenwasserstoffgruppe ist, jedes R⁹ unabhängig eine monovalente Kohlenwasserstoffgruppe von 1 bis 12 Kohlenstoffatomen ist und jedes R¹² unabhängig ein Alken oder ein Cycloalken ist, jedes R¹¹ unabhängig ein Anion ist und der Index n einen Wert von 1 bis 2 aufweist.

8. Verfahren gemäß einem der Ansprüche 1 bis 4, wobei die Ausgangsmaterialien ferner D) einen Wasserstoffakzeptor beinhalten; alternativ die Ausgangsmaterialien ferner D) den Wasserstoffakzeptor beinhalten, der aus der Gruppe ausgewählt ist, die aus Folgendem besteht: tert-Butylethylen, Hepten, Hexen, Cyclohexen, Cyclohepten, Cycloocten oder Norbornen.

9. Verfahren gemäß Anspruch 1, wobei das Arylalkoxysilan die folgende Formel aufweist: 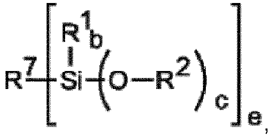 wobei jedes R⁷ unabhängig eine Arylgruppe ist, die von Ausgangsmaterial A) abgeleitet ist, und wobei Index e ≥ 1.

10. Verfahren gemäß Anspruch 3 oder 9, wobei das Arylalkoxysilan aus der Gruppe ausgewählt ist, die aus Folgendem besteht: (i) Phenyldimethylethoxysilan; (ii) Xylyldimethylethoxysilan; (iii) 3-Methoxy-5-methylphenyl,dimethyl,ethoxysilan; (iv) Phenyl,methyl,diethoxysilan; (v) Fluorphenyl,dimethyl,ethoxysilan; (vi) 3,5-Bis(trifluormethyl)phenyl,dimethyl,ethoxysilan; (vii) 1,3-Benzodioxol,dimethyl,ethoxysilan; (viii) Chlorphenyl,dimethyl,ethoxysilan; (ix) Bromphenyl,dimethyl,ethoxysilan; und (ix) Phenyldimethylmethoxysilan.

11. Verfahren gemäß Anspruch 4 oder 9, wobei das Arylalkoxysilan aus der Gruppe ausgewählt ist, die aus Folgendem besteht: (i) 2-(Ethoxydimethylsilyl)-1-methyl-1*H-*pyrrol; (ii) 2-(Ethoxydimethylsilyl)furan; (iii) 2-(Ethoxydimethylsilyl)thiophen; (iv) 1-Methyl-2-(ethoxydimethylsilyl)-1*H*-indol; (v) 2-(Ethoxydimethylsilyl)benzofuran; (vi) 5-Methoxy-2-(ethoxydimethylsilyl)benzofuran; (vii) 2-(Diethoxymethylsilyl)benzofuran; (viii) 2-(Methoxydimethylsilyl)furan; (ix) 2-(Ethoxydimethylsilyl)-5-methylfuran; (x) 2,5-Bis(ethoxydimethylsilyl)furan; und (xi) 2-(Diethoxymethyl)-5-methylfuran.

## Revendications

1. Un procédé pour former un arylalcoxysilane par déshydrogénosilylation entre une liaison Si-H dans un produit de départ A) et une liaison carbone-hydrogène aromatique dans un produit de départ B), où le procédé comprend :
1) la combinaison, dans des conditions appropriées pour former l'arylalcoxysilane, de produits de départ comprenant
A) un alcoxysilane de formule 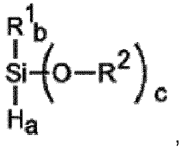 où chaque R¹ est indépendamment un groupe alkyle de 1 à 18 atomes de carbone, chaque R² est indépendamment un groupe alkyle de 1 à 4 atomes de carbone, l'indice a a une valeur moyenne d'au moins 1, l'indice b a une valeur moyenne de 1 à 2, et l'indice c a une valeur moyenne d'au moins 1, et une quantité (a + b + c) = 4 ;
B) un composé aromatique ayant une liaison carbone-hydrogène ; et
C) un catalyseur au rhodium bisphospholane.

2. Le procédé de la revendication 1, où A) l'alcoxysilane a la formule : 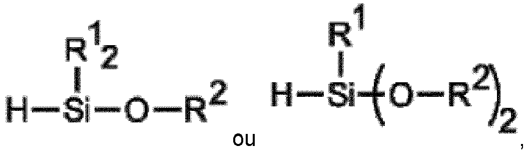 où chaque R¹ est un méthyle ou un éthyle et chaque R² est un méthyle ou un éthyle.

3. Le procédé de la revendication 1 ou de la revendication 2, où B) le composé aromatique a la formule 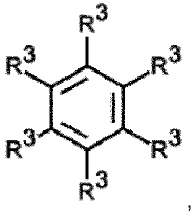 où chaque R³ est indépendamment un atome d'hydrogène, un atome d'halogène, un groupe alkyle, un groupe alkyle halogéné, un groupe hydrocarbyloxy, à condition qu'au moins un R³ est l'hydrogène, et que deux des R³ quels qu'ils soient, conjointement avec n'importe quels atomes auxquels ils sont liés, sont facultativement joints l'un à l'autre afin de former une structure à cycle condensé ; comme variante B) le composé aromatique est sélectionné dans le groupe constitué de benzodioxole, de 3-méthylanisole, de m-xylène, de benzène, de bromobenzène, de chlorobenzène, de fluorobenzène, et de 1,3-bis(trifluorométhyl)benzène.

4. Le procédé de la revendication 1 ou de la revendication 2, où B) le composé aromatique a la formule 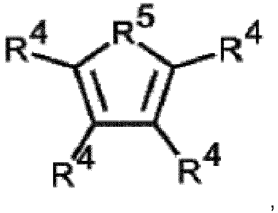 où chaque R⁴ est indépendamment un atome d'hydrogène, un atome d'halogène, un groupe alkyle, un groupe alkyle halogéné, un groupe hydrocarbyloxy ;
et R⁵ est sélectionné parmi le soufre, l'oxygène et un groupe azoté de formule NR⁶, où chaque R⁶ est un atome d'hydrogène ou un groupe alkyle de 1 à 4 atomes de carbone, à condition qu'au moins un R⁴ est l'hydrogène, et que deux des R⁴ quels qu'ils soient, conjointement avec n'importe quels atomes auxquels ils sont liés, sont facultativement joints l'un à l'autre afin de former une structure à cycle condensé ; comme variante B) le composé aromatique est sélectionné dans le groupe constitué de méthylfurane, de benzofurane, de méthoxybenzofurane, de furane, de thiofurane, et de méthylpyrrole.

5. Le procédé de n'importe laquelle des revendications 1 à 4, où le procédé comprend en sus, avant et/ou pendant l'étape 1), la formation C) du catalyseur au rhodium bisphospholane par combinaison d'un précurseur du rhodium qui n'a pas de fonctionnalité bisphospholane et d'un composé de bisphospholane de formule 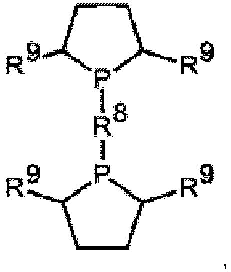 où R⁸ est un groupe hydrocarboné divalent et chaque R⁹ est indépendamment un groupe hydrocarboné monovalent de 1 à 12 atomes de carbone.

6. Le procédé de n'importe laquelle des revendications 1 à 4, où C) le catalyseur au rhodium bisphospholane a une formule : 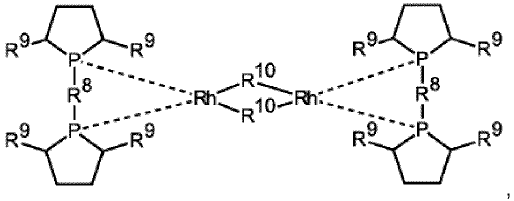 où chaque R⁸ est un groupe hydrocarboné divalent et chaque R⁹ est indépendamment un groupe hydrocarboné monovalent de 1 à 12 atomes de carbone, et chaque R¹⁰ est indépendamment un ligand de charge négative ; comme variante C) le catalyseur au rhodium bisphospholane est sélectionné dans le groupe constitué : de 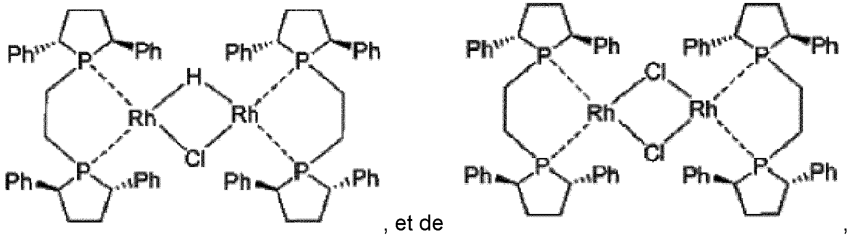 où Ph représente un groupe phényle.

7. Le procédé de n'importe laquelle des revendications 1 à 4, où C) le catalyseur au rhodium bisphospholane a une formule : 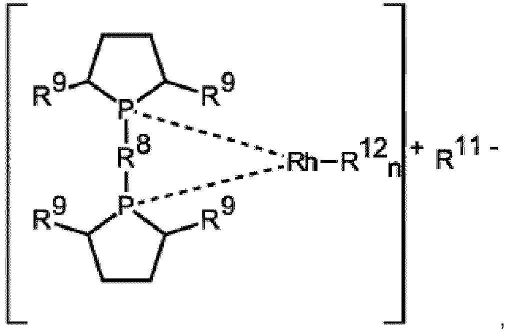 où chaque R⁸ est un groupe hydrocarboné divalent, chaque R⁹ est indépendamment un groupe hydrocarboné monovalent de 1 à 12 atomes de carbone, et chaque R¹² est indépendamment un alcène ou un cycloalcène, chaque R¹¹ est indépendamment un anion, et l'indice n a une valeur de 1 à 2.

8. Le procédé de n'importe laquelle des revendications 1 à 4, où les produits de départ comprennent en sus D) un accepteur d'hydrogène ; comme variante, les produits de départ comprennent en sus D) l'accepteur d'hydrogène sélectionné dans le groupe constitué : d'éthylène de tert-butyle, d'heptène, d'hexène, de cyclohexène, de cycloheptène, de cyclooctène, ou de norbornène.

9. Le procédé de la revendication 1, où l'arylalcoxysilane a la formule : 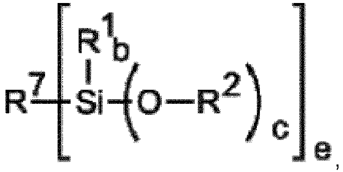 où chaque R⁷ est indépendamment un groupe aryle dérivé du produit de départ A), et l'indice e ≥ 1.

10. Le procédé de la revendication 3 ou de la revendication 9, où l'arylalcoxysilane est sélectionné dans le groupe constitué : (i) de phényldiméthyléthoxysilane ; (ii) de xylyldiméthyléthoxysilane ; (iii) de 3-méthoxy-5-méthylphényl,diméthyl,éthoxysilane ; (iv) de phényl,méthyl,diéthoxysilane ; (v) de fluorophényl,diméthyl,éthoxysilane ; (vi) de 3,5-bis(trifluorométhyl)phényl,diméthyl,éthoxysilane ; (vii) de 1,3-benzodioxole,diméthyl,éthoxysilane ; (viii) de chlorophényl,diméthyl,éthoxysilane ; (ix) de bromophényl,diméthyl,éthoxysilane ; et (ix) de phényldiméthylméthoxysilane.

11. Le procédé de la revendication 4 ou de la revendication 9, où l'arylalcoxysilane est sélectionné dans le groupe constitué : (i) de 2-(éthoxydiméthylsilyl)-1-méthyl-1*H-*pyrrole ; (ii) de 2-(éthoxydiméthylsilyl)furane ; (iii) de 2-(éthoxydiméthylsilyl)thiophène ; (iv) de 1-méthyl-2-(éthoxydiméthylsilyl)-1*H*-indole ; (v) de 2-(éthoxydiméthylsilyl)benzofurane ; (vi) de 5-méthoxy-2-(éthoxydiméthylsilyl)benzofurane ; (vii) de 2-(diéthoxyméthylsilyl)benzofurane ; (viii) de 2-(méthoxydiméthylsilyl)furane ; (ix) de 2-(éthoxydiméthylsilyl)-5-méthylfurane ; (x) de 2,5-bis(éthoxydiméthylsilyl)furane ; et (xi) de 2-(diéthoxyméthyl)-5-méthylfurane.
